Europäisches Patentamt

(19) European Patent Office

Office européen des brevets

(11) Numéro de publication: **0 1 1 2 7 6 7**
**B1**

(12) **FASCICULE DE BREVET EUROPEEN**

(45) Date de publication du fascicule du brevet:
28.10.87

(51) Int. Cl.⁴: **G 06 K 7/10,** G 06 K 7/14

(21) Numéro de dépôt: **83402437.4**

(22) Date de dépôt: **15.12.83**

(54) Procédé de lecture d'un marquage en relief sur un produit et disposotif pour la mise en oeuvredu procédé.

(30) Priorité: **20.12.82 FR 8221353**

(43) Date de publication de la demande:
**04.07.84 Bulletin 84/27**

(45) Mention de la délivrance du brevet:
**28.10.87 Bulletin 87/44**

(84) Etats contractants désignés:
**AT BE CH DE FR GB IT LI LU NL SE**

(56) Documents cités:
**EP - A - 0 062 473**
**GB - A - 1 470 562**
**US - A - 3 380 334**
**US - A - 3 947 691**
**US - A - 4 020 327**

(73) Titulaire: **INSTITUT DE RECHERCHES DE LA SIDERURGIE FRANCAISE (IRSID), 185, rue du Président Roosevelt, F-78105 Saint Germain-en-Laye Cédex (FR)**

(72) Inventeur: **Juret, Thierry, 125, rue de Vallières, F-57070 Metz (FR)**
Inventeur: **Grein, Frédéric, 8, rue Bellevue, F-57110 Illange (FR)**
Inventeur: **Tourscher, Gérard, 6bis, rue de Fêves, F-57140 Norroy-le-Veneur (FR)**

(74) Mandataire: **Ventavoli, Roger et al, INSTITUT DE RECHERCHES DE LA SIDERURGIE FRANCAISE (IRSID) 185, rue Président Roosevelt, F-78105 Saint-Germain-en-Laye (FR)**

# Description

L'invention concerne un procédé de lecture d'un message codé sur un produit, notamment un produit métallurgique, tel qu'un rail, dont une surface comporte un marquage en relief réalisé sous forme de segments rectilignes disposés parallèlement entre eux de façon à définir ledit message codé.

Il est de pratique courante d'identifier des produits métallurgiques, en particulier les rails, pour pouvoir les classer. Le classement s'effectue en fonction de certains critères (comme la nuance, la date de laminage, la qualité, etc.) permettant, par exemple, de rebuter les articles défectueux et d'élaborer pour les autres des fiches signalétiques destinées à les accompagner auprès de la clientèle.

La technique générale consiste à opérer en deux temps: marquage préalable du rail à la sortie du laminoir, et reconnaissance ultérieure du rail par lecture de la marque.

Actuellement, on utilise industriellement deux méthodes qui présentent chacune des inconvénients. Selon la première méthode, on effectue le marquage à la peinture à chaud. Cette pratique est coûteuse, aussi bien en raison de la consommation en matière chère que par suite de l'utilisation d'une marqueuse spéciale. Puis on opère une lecture directe à distance par le pontier, ce qui est source d'erreurs.

Selon la deuxième méthode, on effectue un marquage en relief, généralement par poinçonnage, et on opère une lecture «à vue» à proximité par un inspecteur qui commande au pontier; cela est également coûteux au moins en personnel et non exempt de risques d'erreurs.

Le but de l'invention est de proposer une technique simple de lecture automatique, à distance et sans contact, du marquage par segments en relief.

Ce but est atteint conformément à l'invention en ce qu'on dirige un rayon lumineux sur la surface marquée de façon à y former une tache qu'on observe dans des conditions de réflexion sensiblement spéculaire à l'aide de moyens photosensibles, en particulier un réseau de cellules photodiodes, dont l'axe optique forme avec ledit rayon lumineux un plan par lequel passent les segments de codage au cours d'un déplacement relatif entre le produit et le réseau photosensible, ce dernier comprenant des cellules photosensibles au moins dans ledit plan, et on conclut à la présence d'un segment lorsqu'on observe simultanément un déplacement de l'image de la tache sur le réseau et un affaiblissement de son intensité, suite à une évolution de sa forme.

Des dispositifs classiques de traitement de l'image permettent de définir et d'observer avec précision ces deux phénomènes.

Ainsi, l'invention a-t-elle également pour objet un dispositif de mise en oeuvre comprenant une source d'un rayon lumineux incident sur la surface du produit marqué, des moyens photosensibles de réception du rayon réfléchi qui forme avec le rayon incident un plan par lequel passent les segments de codage du produit marqué, et des moyens de traitement, de l'image de l'impact dudit rayon réfléchi sur les moyens photosensibles, capables de détecter simultanément un déplacement de cette image et un affaiblissement de son intensité.

Ainsi l'invention repose sur l'interprétation de la simultanéité de ces deux phénomènes. On sait que le déplacement de l'image de la tache sur le réseau est lié aux variations du chemin optique qui se traduit par un changement de la position du lieu où se forme la tache que l'on observe, ce qui est le propre de toute triangulation optique, et que l'affaiblissement de l'intensité résulte de l'écart des conditions de réflexion spéculaire conduisant à une image de diffusion plus étalée.

L'observation simultanée de ces deux phénomènes donne une information redondante qui permet un sécurité absolue sur l'authenticité de ce qu'on détecte.

En fait, on a découvert selon l'invention que l'observation d'un seul des deux phénomènes n'est pas toujours suffisante compte-tenu de la précision. En effet, si on suit seulement le déplacement de l'image, un déplacement de faible amplitude (correspondant à une marque de faible profondeur, 0,5 mm par exemple) pourrait être confondu avec le bruit de fond dû aux vibrations transversales de l'ensemble produit - système optique; et si l'on observe seulement l'affaiblissement de l'intensité, le phénomène peut être dû à la présence de calamine ou autres irrégularités de surface créant également un bruit de fond.

La discrimination basée sur la simultanéité des deux phénomènes permet d'obtenir une information fiable.

De préférence, on lit le message codé sur le produit en défilement, l'observation se faisant à poste fixe. L'inertie du produit étant supérieure à celle du capteur, le déplacement du produit entraîne un bruit de fond plus faible que le déplacement du capteur, ce qui permet de détecter de très faibles déplacements de l'image, c'est-à-dire des marquages de faible profondeur, le cas échéant (la limite inférieure admissible pour les profondeurs de marquage étant déterminée par les aspérités de surface).

Avantageusement, le plan formé par le rayon lumineux et l'axe optique du réseau photosensible est parallèle aux segments du message codé. Bien que ce soit ainsi qu'on obtient les meilleurs résultats, on peut, en alternative, disposer le système optique dans un plan perpendiculaire aux segments, l'important étant que ces derniers passent d'un manière ou d'une autre dans ledit plan.

Avantageusement, on fixe un seuil d'intensité minimum pour prendre en compte l'excitation d'une cellule du réseau photosensible. On observe alors le déplacement de l'image en détectant le déplacement du barycentre des cellules excitées au-dessus dudit seuil.

Avantageusement, on conclut à la présence d'un segment lorsqu'on observe simultanément le déplacement du barycentre des cellules excitées au-dessus dudit seuil et la diminution du nombre de ces cellules excitées.

Le programme pour détecter la simultanéité des deux phénomènes peut consister à surveiller essentiellement le déplacement du barycentre: si un déplacement est constaté, on observe alors s'il s'accompagne ou non d'un affaiblissement du poids de ce barycentre (i.e. du nombre de cellules excitées au-delà du seuil), ce qui permet de conclure ou non à la lecture d'un segment.

Inversement, on peut surveiller l'affaiblissement éventuel du poids du barycentre: s'il est constaté, on observe alors s'il s'accompagne ou non d'un déplacement du barycentre.

D'autres avantages et caractéristiques de l'invention ressortiront de la description suivante d'un mode particulier, mais non limitatif, de réalisation.

On se réfère au dessin annexé sur lequel:

la fig. 1 représente une vue latérale d'un rail marqué et du système optique;

la fig. 2 représente en coupe schématique un relief de marquage, et le cheminement d'un rayon de scrutation;

la fig. 3 est un graphique représentant l'intensité des différentes cellules du réseau photosensible dans le cas où le rayon de scrutation tombe sur la surface du produit (réflexion spéculaire);

la fig. 4 est un graphique analogue dans le cas où le rayon de scrutation tombe sur un relief de marquage;

la fig. 5 est une vue schématique transversale du rail au niveau du système optique.

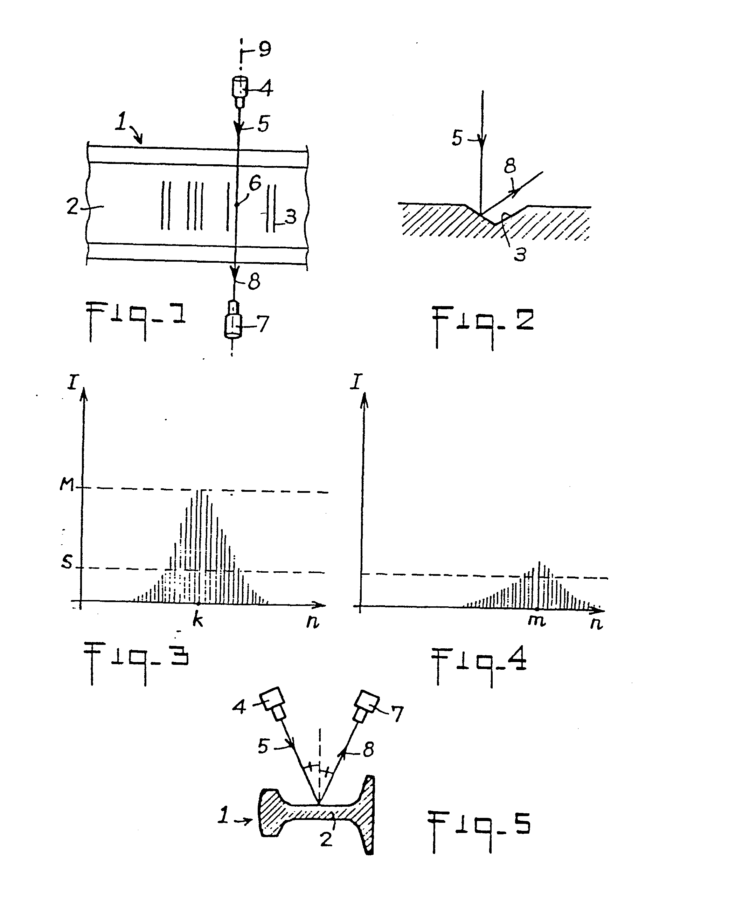

Un rail 1 comporte sur la surface de son âme 2 un marquage en relief (creux ou plein) constitué par un code de segments 3 dont le nombre et les écartements définissent le message à lire et à déchiffrer. Les reliefs 3 peuvent être réalisés en creux par des entailles en V à l'aide d'un poinçon (cf. fig. 2).

Un émetteur laser 4 envoie un rayon incident 5 bien confiné sur la surface 2 où il forme une tache ponctuelle 6. Celle-ci est observée au moyen d'un réseau photosensible 7 dont l'axe optique est de préférence confondu avec le rayon réfléchi 8 en supposant la surface 2 idéale (conditions de réflexion spéculaire, cf. fig. 5).

Le rayon incident 5 et l'axe optique 8 forment un plan de trace 9 (fig. 1) par lequel vont passer les segments 3 au cours du déplacement du produit (flèche 10). Le réseau photosensible 7 comprend des cellules photosensibles principales au moins dans ce plan de trace 9.

Bien qu'un déplacement du poste d'émission et d'observation soit possible, il est préférable que le produit défile car, du fait de son inertie, son déplacement entraîne moins de bruit de fond que le déplacement du réseau photosensible: on peut donc faire une observation plus fine et détecter de très faibles déplacements de l'image selon le principe que l'on va maintenant décrire.

Lorsque la tache 6 éclaire la surface 2, les cellules principales du réseau photosensible 7 sont excitées selon des intensités variables représentées sur le graphique de la figure 3, où l'intensité 1 figure en ordonnées tandis que des abscisses désignent les différentes cellules. L'intensité est maximale en centre de l'image de la tache et peut même atteindre avantageusement le seuil M de saturation des cellules. L'intensité des cellules avoisinantes peut décroître théoriquement jusqu'à zéro, mais la présence d'un bruit de fond peut imposer par sécurité de ne tenir compte que des cellules excitées au-dessus d'un certain seuil S de signification.

Il est alors facile de repérer l'image en repérant le barycentre k des cellules excitées au-dessus du seuil S. Ce barycentre k peut être affecté d'un poids égal au nombre desdites cellules excitées au-dessus dudit seuil (quinze sur l'exemple de la figure 3), ce poids étant en rapport avec l'intensité moyenne de la tache.

Lorsque le rayon incident arrive sur le relief 3 (rayon 5', figure 2), le déplacement de la tache entraîne un déplacement corrélatif de son image sur le réseau de photodiodes (dont l'axe principal est dans le plan de trace 9).

Par ailleurs, l'écart des conditions de réflexion et de diffusion entraîne un affaiblissement de l'intensité d'excitation des cellules du réseau sensible (cf. fig. 4). Là encore, on peut repérer le barycentre m de la nouvelle image et l'affecter du poids (six sur la fig. 4) correspondant au nombre de cellules suffisamment excitées.

Selon l'invention, c'est l'observation simultanée de ces deux effets (déplacement et affaiblissement) qui permet de conclure avec certitude à la présence d'un segment de message codé.

A partir de là, la reconstitution du message ne pose pas de problème: de proche en proche, on détecte tous les segments et on peut alors soit repérer leur position relative, soit déterminer leurs écartements à l'aide d'une base de temps et en connaissant la vitesse du produit à scruter.

Bien entendu, l'invention se se limite pas à l'exemple décrit ci-avant mais s'étend à de multiples variantes ou équivalents dans la mesure où sont respectées les caractéristiques énoncées dans les revendications jointes.

En particulier, il est avantageux mais nullement obligatoire que la tache lumineuse soit ponctuelle. On peut en effet mettre en oeuvre une tache en forme de fente linéaire croisant les marques de codage. Toutefois, on comprend aisément qu'une variante de ce type augmenterait sensiblement le bruit de fond du signal reçu sur le réseau photosensible. De préférence, l'invention sera donc mise en oeuvre avec une tache ponctuelle, laquelle pourra être aisément produite à l'aide d'un faisceau lumineux confiné issu d'un laser.

Par ailleurs, le réseau de photodiodes peut être remplacé par un photopotentiomètre dont le courant global est proportionnel à l'énergie reçue et la différence relative entre les deux courants issus du photopotentiomètre est proportionnelle à la répartition géométrique de la lumière incidente.

En outre, on aura clairment compris que l'invention ne s'applique pas uniquement aux rails, mais s'étend à tout produit, manufacturé ou non, comportant en surface un message codé sous forme de segments rectilignes parallèles en relief.

## Rervendications

1. Procédé de lecture d'un message codé sur un produit (1) dont une surface (2) comporte un marquage en relief réalisé sous forme de segments (37) rectilignes disposées parallèlement entre eux de façon à définir ledit message codé, caractérisé en ce que l'on dirige un rayon lumineux incident (5) sur la surface marquée (2) de façon à y former une tache qu'on observe dans des conditions de réflexion sensiblement spéculaire à l'aide de moyens photosensibles (7) dont l'axe optique forme avec ledit rayon lumineux (5) un plan (9) par lequel passent les segments de codage (3) au cours d'un déplacement relatif entre le produit (1) et les moyens photosensibles (7), et on conclut à la présence d'un segment (3) lorsqu'on observe simultanément sur les moyens photosensibles (7) un déplacement de l'image de la tache et un affaiblissement de son intensité résultant de l'évolution de sa forme.

2. Procédé selon la revendication 1, caractérisé en ce qu'on lit le message codé sur le produit (1) en défilement, l'observation se faisant à poste fixe.

3. Procédé selon l'une quelconque des revendications 1 ou 2, caractérisé en ce que le plan (9) formé par le rayon lumineux incident (5) et l'axe optique des moyens photosensibles (7) est parallèle aux segments (63) du message codé.

4. Procédé selon l'une quelconque des revendications 1 à 3, caractérisé en ce que les moyens photosensibles (7) sont constitués par un réseau de cellules photosensibles et en ce que l'on fixe un seuil d'intensité minimum (S)pour prendre en compte l'excitation d'une cellule du réseau photosensible (7).

5. Procédé selon la revendication 4, caractérisé en ce que l'on observe le déplacement de l'image en observant le déplacement du barycentre (k, m) des cellules excitées au-dessus dudit seuil (S).

6. Procédé selon la revendication 5, caractérisé en ce qu'on conclut à la présence d'un segment lorsqu'on observe simultanément le déplacement dudit barycentre et la diminution du nombre de ces cellules excitées.

7. Dispositif pour la mise en œuvre du procédé selon la revendication 1 comprenant une source (4) d'un rayon lumineux incident (5) sur la surface (2) du produit marqué (1) et des moyens photosensibles (7) de réception d'un rayon lumineux (8) réfléchi par la surface (62), caractérisé en ce que la source (4) et les moyens photosensibles (7) sont disposés de manière que le rayon incident (5) et le rayon réfléchi (8) selon l'axe optique des moyens photosensibles (7) forment un plan (9) par lequel passent les segments de codage (3) du produit marqué (1), et des moyens de traitement de l'image créée par l'impact du rayon réfléchi (8) sur les moyens photosensibles (7) sont prévus pour détecter simultanément un déplacement de ladite image et un affaiblissement de son intensité.

8. Dispositif selon la revendication 7 caractérisé en ce que les moyens photosensibles (7) sont constitués par un réseau de cellules photosensibles.

9. Dispositif selon la revendication 7 caractérisé en ce que les moyens photosensibles (7) sont constitués par un phototentiomètre.

## Patentansprüche

1. Verfahren zum Lesen einer kodierten Information auf einem Gegenstand (1), der auf einer Oberfläche (2) eine Reliefmarkierung trägt in Form geradliniger Segmente (3), die parallel zueinander derart angeordnet sind, dass sie die kodierte Information bilden, dadurch gekennzeichnet, dass ein auftreffender Lichtstrahl (5) derart auf die markierte Oberfläche gerichtet wird, dass dort ein Lichtfleck entsteht, der in erster Linie beobachtet wird unter Spiegel-Reflexionsbedingungen mittels einer lichtempfindlichen Anordnung (7), deren optische Achse mit dem Lichtstrahl (5) eine Ebene (9) bildet, die von den Kodiersegmenten (3) durchgesetzt wird während einer Relativverschiebung zwischen dem Gegenstand (1) und der lichtempfindlichen Anordnung (7), und dass auf das Vorhandensein eines Segmentes (3) geschlossen wird, sofern von der lichtempfindlichen Anordnung (7) gleichzeitig eine Verschiebung des Bildes des Lichtflecks und eine Verringerung seiner Intensität beobachtet wird aufgrund seiner Formänderung.

2. Verfahren nach Anspruch 1, dadurch gekennzeichnet, dass das lesen der kodierten Information auf dem Gegenstand (1) während dessen bewegung erfolgt, wobei die beobachtungsstation feststeht.

3. Verfahren nach einem der Ansprüche 1 oder 2, dadurch gekennzeichnet, dass die durch den auftreffenden Lichtstrahl (5) und die optische Achse der lichtempfindlichen Anordnung (7) gebildete Ebene Parallel zu den die kodierte Information bildenden Segmenten (3) ist.

4. Verfahren nach einem der Ansprüche 1 bis 3, dadurch gekennzeichnet, dass die lichtempfindliche Anordnung (7) aus einem Gitter aus lichtempfindlichen Zellen besteht und dass eine minimale Intensitätsschwelle (S) festgelegt wird zur Festlegung eines Ansprechens einer Zelle des lichtempfindlichen Gitters (7).

5. Verfahren nach Anspruch 4, dadurch gekennzeichnet, dass die Bildverschiebung beobachtet wird durch Beobachtung der Verschiebung des Bary-Zentrums (k, m), der oberhalb dieser Schwelle (S) ansprechenden Zellen.

6. Verfahren nach Anspruch 5, dadurch gekennzeichnet, dass auf das Vorhandensein eines Segments geschlossen wird sofern gleichzeitig die Verschiebung dieses Bary-Zentrumes und die Verringerung der Anzahl der ansprechenden Zellen beobachtet wird.

7. Vorrichtung zur Durchführung des Verfahrens nach Anspruch 1 mit einer Quelle (4) für einen auftreffenden Lichtstrahl (5) auf die Oberfläche (2) des markierten Gegenstandes (1) und mit einer lichtempfindlichen Anordnung (7) zum Empfang eines von der Oberfläche (2) reflektierten Lichtstrahls (8), dadurch gekennzeichnet, dass die Quelle (4) und die lichtempfindliche Anordnung (7) derart angeordnet sind, dass der auftreffende Strahl und der reflektierte Strahl (8) entsprechend der optischen Achse der lichtempfindlichen Anordnung (7) eine Ebene (9) bilden, die von den Kodiersegmenten (3) des markierten Gegenstandes (1) durchsetzt wird und eine Anordnung zur Verarbeitung des Bildes aufweist, das durch das Auftreffen des reflektierten Strahls (8) auf der lichtempfindlichen Anordnung (7) erzeugt wird, um gleichzeitig eine Verschiebung dieses Bildes und eine Verringerung seiner Intensität zu messen.

8. Vorrichtung nach Anspruch 7, dadurch gekennzeichnet, dass die lichtempfindliche Anordnung (7) aus einem Gitter aus lichtempfindlichen Zellen besteht.

9. Vorrichtung nach Anspruch 7, dadurch gekennzeichnet, dass die lichtempfindliche Anordnung (7) aus einem Fotopotentiometer besteht.

**Claims**

1. A method of reading a coded message on an object (1) one surface (2) of which bears an embossed marking realized in the form of rectilinear segments (3) disposed parallel to each other so as to define said coded message, characterized in that an incident light beam (5) is directed onto the marked surface (2) so as to form a spot there which is observed under substantially specular reflection conditions with the aid of photosensitive means (7) whose optical axis forms with said light beam (5) a plane (9) which the coding segments (3) pass during relative displacement of the object (1) and the photosensitive means (7), and the presence of a segment (3) is identified when a displacement of the image of the spot and a weakening of its intensity resulting from its change of shape are simultaneously observed on the photosensitive means (7).

2. A method according to claim 1, characterized in that the coded message is read on the object (1) while it passes by, the observation being made in stationary position.

3. A method according to either of claims 1 and 2, characterized in that the plane (9) formed by the incident light beam (5) and the optical axis of the photosensitive means (7) is parallel to the segments (3) of the coded message.

4. A method according to any of claims 1 to 3, characterized in that the photosensitive means (7) are constituted by a network of photosensitive cells and in that a minimum intensity threshold (S) is fixed for taking account of the excitation of a cell of the photosensitive network (7).

5. A method according to claim 4, characterized in that the displacement of the image is observed by observing the displacement of the center of gravity (k, m) of the cells excited above said threshold (S).

6. A method according to claim 5, characterized in that the presence of a segment is identified when the displacement of said center of gravity and the reduction of the number of these excited cells are observed simultaneously.

7. An apparatus for carrying out the method according to claim 1 comprising a source (4) of a light beam (5) incident on the surface (2) of the marked object (1), and photosensitive means (7) for receiving a light beam (8) reflected by said surface (2), characterized in that the source (4) and the photosensitive means (7) are disposed in such a way that the incident beam (5) and the reflected beam (8) conforming with the optical axis of the photosensitive means (7) form a plane (9) which the coding segments (3) of the marked object (1) pass, and means for treating the image creatred by the impact of the reflected beam (8) on the photosensitive means (7) are provided for simultaneously detecting a displacement of said image and a weakening of its intensity.

8. An apparatus according to claim 7, characterized in that the photosensitive means (7) are constituted by a network of photosensitive cells.

9. An apparatus according to claim 7, characterized in that the photosensitive means (7) are constituted by a photopotentiometer.

Fig-1

Fig-2

Fig-3

Fig-4

Fig-5